# EUROPEAN PATENT APPLICATION

(11) **EP 3 978 167 A1**
(43) Date of publication of application: **06.04.2022**
(21) Application number: 21196751.8
(22) Date of filing: 15.09.2021
(51) Int. Cl.: B22F 10/28, B22F 10/34, B33Y 10/00, B33Y 30/00

(54) **SYSTEM AND METHOD FOR MANUFACTURING A COMPONENT**

(30) Priority: 01.10.2020 GB 202015557
(71) Applicant: Rolls-Royce plc, London N1 9FX (GB)
(72) Inventor: Poole, David, Derby, DE24 8BJ (GB)
(74) Representative: Rolls-Royce plc

(57) **Abstract**

A system (100) for manufacturing a component (102) is provided. The system (100) includes a build platform (104), a powder delivery unit (106), an energy unit (108), at least one analyser (110), and a controller (112). The build platform (104) has a build surface (114). The powder delivery unit (106) is configured to deposit successive layers (118) of a powdered material (120) on the build surface (114) of the build platform (104) to form a powder bed (121). The energy unit (108) is configured to selectively direct an energy beam (EB) to one or more predetermined portions of each successive layer (118) of the powder bed (121) to fuse the powdered material (120). The at least one analyser (110) is configured to direct an X-ray beam (XB) to the powdered material (120) and detect an X-ray fluorescence (XF) emitted by the powdered material (120) in response to being excited by the X-ray beam (XB). The controller (112) is configured to determine a contamination of the powdered material (120) based on the detection of the X-ray fluorescence (XF).

## Description

### FIELD OF THE DISCLOSURE

The present disclosure concerns a system and a method for manufacturing a component.

### BACKGROUND

Powder bed fusion is an additive manufacturing technique where a bed of powder is selectively fused by an energy source (e.g., a laser or an electron beam) progressively to create a three-dimensional object. A feedstock material used in a powder bed fusion system is in the form of a powder. The powder may be susceptible to contamination. For example, during production, the powder is typically recycled multiple times and often replenished or "topped up" between production cycles. Mixing of different feedstock materials (e.g., different material grades) can occur during such recycling or replenishment. If a working volume of the powdered feedstock is contaminated, it may result in a non-confirming build/part.

Conventional quality control methods include building specimens alongside parts and/or taking powder samples. Powder sampling may not be a robust method as the contamination may not be captured in the sample. Specimen manufacture and testing may not be a robust method as the contamination may not be captured in the specimen. Therefore, such conventional methods only provide quality assurance for the specimen made or the sample taken, and are not representative of the actual part or parts being produced. Further, powder analysis and/or specimen testing is typically costly and not real-time. By the time testing has identified contamination, multiple parts/builds may have been affected. Contamination can potentially impact a long period of production, for example, several months of production. Waiting for testing before continuing may also not be practicable as it will significantly slow down production cycles.

### SUMMARY OF THE DISCLOSURE

In one aspect, there is provided a system for manufacturing a component. The system includes a build platform, a powder delivery unit, an energy unit, at least one analyser, and a controller. The build platform has a build surface. The powder delivery unit is configured to deposit successive layers of a powdered material on the build surface of the build platform to form a powder bed. The energy unit is configured to selectively direct an energy beam to one or more predetermined portions of each successive layer of the powder bed to fuse the powdered material. The at least one analyser is configured to direct an X-ray beam to the powdered material and detect an X-ray fluorescence emitted by the powdered material in response to being excited by the X-ray beam. The controller is configured to determine a contamination of the powdered material based on the detection of the X-ray fluorescence.

The analyser using X-ray fluorescence (XRF) analysis may provide real-time monitoring during production of the component. XRF analysis can occur in real-time while the energy beam is fusing a previous layer of the powder bed. As a result, the addition of the analyser may not increase a build time of a fabrication process. Further, XRF analysis may provide material monitoring of all the parts that are produced. Therefore, XRF analysis can provide real-time 100% monitoring or coverage of the powder bed or the powdered material unlike conventional methods like powder sampling or specimen measurement. Consequently, any contamination may not propagate through multiple production cycles and builds. Additionally, production cycles may not be slowed down. XRF analysis can also avoid per-part cost of conventional quality assurance (QA) methods. Integration of XRF analysis with the system may also be cost effective and convenient.

In some embodiments, the system further includes a build piston coupled to the build platform and configured to selectively move the build platform.

In some embodiments, the powder delivery unit further includes a delivery platform, a recoating member, and a delivery piston. The delivery platform receives the powdered material thereon. The recoating member is movable relative to the delivery platform and configured to selectively deposit the successive layers of the powdered material on the build surface. The delivery piston is coupled to the delivery platform and configured to selectively move the delivery platform.

In some embodiments, the recoating member is one of a blade and a roller.

In some embodiments, the at least one analyser further includes an X-ray source and an X-ray detector. The X-ray source is configured to generate and direct the X-ray beam. The X-ray detector is configured to detect the X-ray fluorescence emitted by the powdered material in response to being excited by the X-ray beam.

In some embodiments, the energy unit further includes an energy source and a scanning module. The energy source is configured to selectively generate the energy beam. The scanning module is configured to direct the energy beam generated by the energy source.

In some embodiments, the energy source is one of a laser source and an electron beam source.

In some embodiments, the at least one analyser is disposed above the build platform.

In some embodiments, the at least one analyser is disposed above the powder delivery unit.

In some embodiments, the controller is further configured to determine that a weight percentage of a contaminant in the powdered material is above a predetermined threshold.

Determining the weight percentage of the contaminant may provide accurate determination of contamination of the powdered material.

In another aspect, there is provided a method for manufacturing a component. The method includes depositing successive layers of a powdered material on a build surface of a build platform to form a powder bed. The method further includes directing an energy beam to one or more predetermined portions of each successive layer of the powder bed to fuse the powdered material. The method further includes directing an X-ray beam to the powdered material. The method further includes detecting an X-ray fluorescence emitted by the powdered material in response to being excited by the X-ray beam. The method further includes determining a contamination of the powdered material based on the detection of the X-ray fluorescence.

The method may provide real-time monitoring of the powdered material. Further, the method may provide full coverage of the powdered material or the powder bed.

In some embodiments, the method further includes selectively lowering the build platform.

In some embodiments, depositing the successive layers of the powdered material on the build surface further includes providing the powdered material on a delivery platform; and moving a recoating member relative to the delivery platform to deposit the successive layers of the powdered material on the build surface.

In some embodiments, the X-ray beam is directed to at least one of: the powder bed on the build surface; and the powdered material provided on the delivery platform.

In some embodiments, determining the contamination of the powdered material further includes determining that a weight percentage of a contaminant in the powdered material is above a predetermined threshold.

The skilled person will appreciate that, except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only, with reference to the Figures, in which:
**Figure 1** is a schematic view of a system for manufacturing a component;
**Figure 2** is a detailed view of a powder bed and the component associated with the system of Figure 1;
**Figure 3** is an exemplary plot showing a sample spectrum and a measured spectrum;
**Figure 4** is a schematic view of another system for manufacturing a component;
**Figure 5** is a schematic view of yet another system for manufacturing a component; and
**Figure 6** is a flowchart of a method for manufacturing a component.

### DETAILED DESCRIPTION

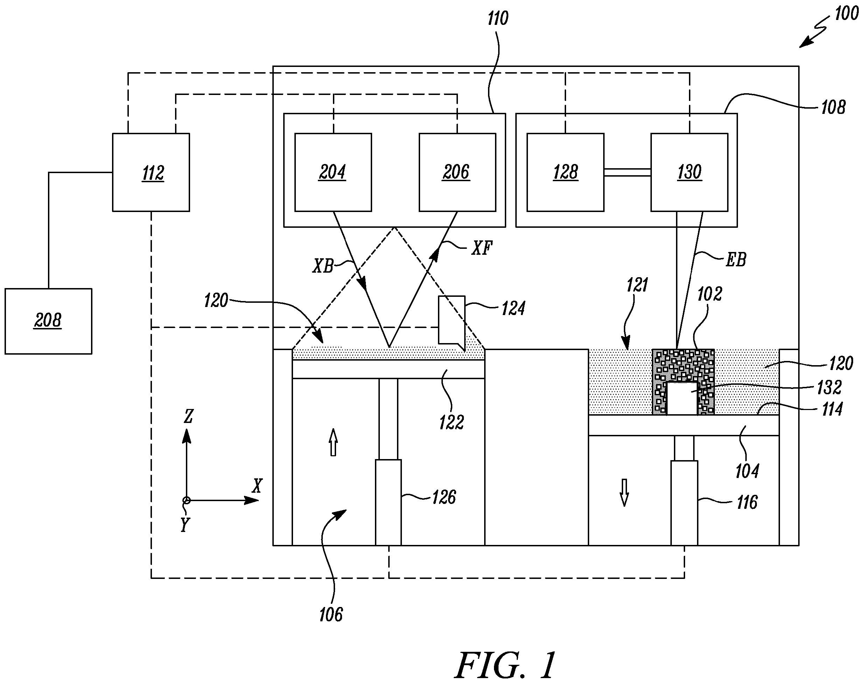

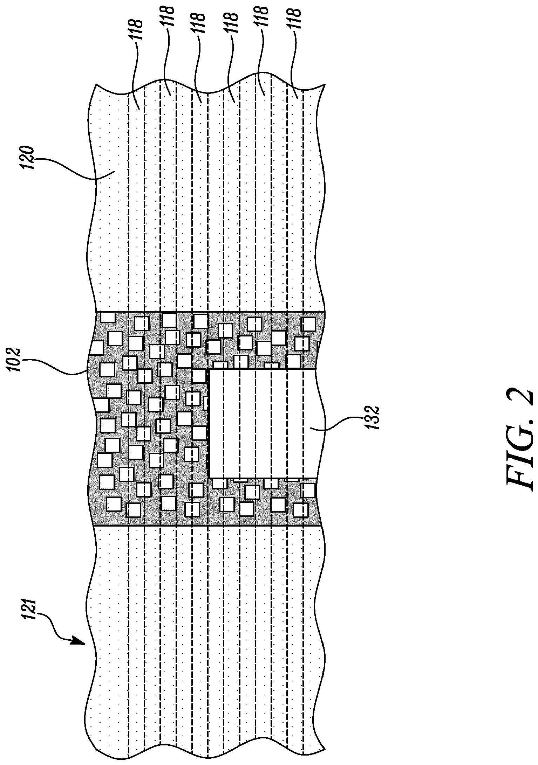

Figure 1 illustrates a system 100 for manufacturing a component 102. The system 100 includes a build platform 104, a powder delivery unit 106, an energy unit 108, at least one analyser 110, and a controller 112. Three mutually perpendicular axis X, Y and Z are also defined with respect to the system 100. Figure 2 shows a detailed view of the component 102 being produced.

Referring to Figures 1 and 2, the build platform 104 includes a build surface 114. In some embodiments, the build surface 114 is substantially planar. In other embodiments, the build surface 114 may be curved. The system 100 further includes a build piston 116 coupled to the build platform 104 and configured to selectively move the build platform 104. In the illustrated embodiment of Figure 1, the build piston 116 selectively moves the build platform 104 along the Z-axis. The build piston 116 may be actuated hydraulically, pneumatically, electrically, mechanically, or any combinations thereof.

The powder delivery unit 106 is configured to deposit successive layers 118 (shown in Figure 2) of a powdered material 120 on the build surface 114 of the build platform 104 to form a powder bed 121. The powder delivery unit 106 further includes a delivery platform 122, a recoating member 124 and a delivery piston 126. The delivery platform 122 receives the powdered material 120 thereon. In some embodiments, the delivery platform 122 has a substantially planar surface for receiving the powdered material 120. In some other embodiments, the delivery platform 122 may have a curved surface. In some cases, the delivery platform 122 may receive the powdered material 120 from a powder hopper (not shown).

The recoating member 124 is movable relative to the delivery platform 122 and configured to selectively deposit the successive layers 118 of the powdered material 120 on the build surface 114. The recoating member 124 may be movable along the X-axis relative to the delivery platform 122. As shown in Figure 1, the recoating member 124 is a blade or an arm. The recoating member 124 may have any suitable shape, for example, rectangular, square, polygonal, and so forth. In other embodiments, the recoating member 124 may be a roller. The recoating member 124 may be actuated hydraulically, pneumatically, electrically, mechanically, or any combinations thereof.

The delivery piston 126 is coupled to the delivery platform 122 and configured to selectively move the delivery platform 122. In the illustrated embodiment of Figure 1, the delivery piston 126 selectively moves the delivery platform 122 along the Z-axis. The delivery piston 126 may be actuated hydraulically, pneumatically, electrically, mechanically, or any combinations thereof.

The energy unit 108 is configured to selectively direct an energy beam "EB" to one or more predetermined portions of each successive layer 118 of the powder bed 121 to fuse the powdered material 120. The energy unit 108 further includes an energy source 128 and a scanning module 130. The energy source 128 is configured to selectively generate the energy beam "EB". In some embodiments, the energy source 128 is one of a laser source and an electron beam source. In some embodiments, the energy source 128 may be a fibre laser, for example, an ytterbium fibre laser. The energy unit 108 may further include a focusing lens unit (not shown) to focus the energy beam "EB" emitted by the energy source 128.

The scanning module 130 is configured to direct the energy beam "EB" generated by the energy source 128. Specifically, the scanning module 130 may direct the energy beam "EB" to the one or more predetermined portions of each successive layer 118 of the powder bed 121 to fuse the powdered material 120. The scanning module 130 may scan the energy beam "EB". Specifically, the scanning module 130 may include a moveable mirror unit (not shown) to allow scanning of the energy beam "EB" in two dimensions, i.e., along the X-Y plane.

In the present embodiment, the system 100 is operative to perform powder bed fusion. Powder bed fusion is an additive layer manufacturing (ALM) technique where the powder bed 121 is selectively fused by the energy unit 108 progressively to create a three-dimensional object, for example, the component 102. The system 100 may fuse the powdered material 120. This may be achieved by one or more of selective laser melting (SLM), selective laser sintering (SLS), and electron beam melting (EBM) of the powdered material 120.

The co-ordination of the build piston 116, the delivery piston 126, the recoating member 124, the energy source 128, and the scanning module 130 may be performed by the controller 112. The controller 112 may be communicably coupled to various components of the system 100 via wired or wireless connections. The controller 112 may lower the build piston 116, raise the delivery piston 126, move the recoating member 124 in a reciprocating manner, and control the energy unit 108. The controller 112 may control the energy unit 108 to selectively focus and scan the energy beam "EB" to fuse the powdered material 120. The controller 112 may use the scanning module 130 to scan one or more predetermined portions of each successive layer 118 of the powder bed 121 based on 3D model data of the component 102. The system 100 may therefore provide layer-by-layer fabrication of the component 102. In some cases, the component 102 may be supported by one or more supports 132. Further, in some cases, multiple components may be simultaneously fabricated by the system 100. In some cases, the system 100 may be maintained in an inert environment, such as a high vacuum, argon or an equivalent environment.

The component 102 may be a solid article. The component 102 may be porous or non-porous. In some cases, the component 102 may be used in a gas turbine engine.

In some embodiments, the powdered material 120 is a metal powder, such as a nickel-base superalloy. In some examples, the nickel-base superalloy is Inconel 718. Other nickel-base superalloy such as Inconel 625, CM247LC, CMSX486, or otherwise may be used. Alternatively, the metal powder can be an aluminium alloy such as AlSi10Mg, a titanium alloy such as Ti6AI4V, or any other metal or metal alloy.

In some cases, the powdered material 120 may be gas atomised, however other methods of powder atomisation or indeed any other method of forming powdered material may be used. In some cases, the powdered material 120 has maximum dimension of about 15 to 53 micrometres, although it will be appreciated that other powder fineness may be used.

In some embodiments, each layer 118 is about 20 micrometres thick. However, other thicknesses, such as up to around 100 micrometres, or any other thickness, may be chosen depending upon the required resolution, amongst other considerations.

The system 100 may be used with powder feedstock of various material grades. One material grade may be undistinguishable from another. Therefore, it may be possible to inadvertently mix different feedstock materials during manufacturing operations. During production, the powder feedstock is typically recycled multiple times and often replenished or "topped up" between production cycles. Mixing of different feedstock materials can occur during such recycling or replenishment. If a working volume of the powdered material 120 is contaminated, it may result in a non-confirming build/part, i.e., the component 102 may be non-confirming. Further, such contamination may adversely impact a long period of production, for example, several months of production. The system 100 may be configured to detect such contamination in real-time, i.e., during fabrication of the component 102.

The system 100 includes the at least one analyser 110 configured to direct an X-ray beam "XB" to the powdered material 120 and detect an X-ray fluorescence "XF" emitted by the powdered material 120 in response to being excited by the X-ray beam "XB". The at least one analyser 110 further includes an X-ray source 204 and an X-ray detector 206. The X-ray source 204 is configured to generate and direct the X-ray beam "XB". In some embodiments, the X-ray source 204 is an X-ray generator including an X-ray tube (not shown). The X-ray detector 206 is configured to detect the X-ray fluorescence "XF" emitted by the powdered material 120 in response to being excited by the X-ray beam "XB". The X-ray detector 206 can be a silicon drift detector (SDD) or any other type of detector. The at least one analyser 110 may further include additional components, such as crystals, collimators, scanning units, and the like.

In the illustrated embodiment, the system 100 includes one analyser 110. However, the system 100 may include multiple analysers 110. Further, as shown in Figure 1, the analyser 110 is disposed above the powder delivery unit 106. The analyser 110 is therefore used to analyse the powdered material 120 before delivery to the build platform 104. However, the analyser 110 may be alternatively or additionally be disposed above the build platform 104. The location and number of the analyser 110 may vary as per application requirements, for example, a powder delivery mechanism of the system 100. In some cases, multiple analysers 110 may be arranged in an array to provide full coverage of the powdered material 120. The number of the analysers 110 may depend on a field of view of the analyser 110, a distance between the analyser 110 and other components, and a sensitivity of the analyser 110.

The analyser 110 may scan a whole area of the delivery platform 122. In other words, the analyser 110 may scan the whole area that includes the powdered material 120. The powdered material 120 on the delivery platform 122 may be periodically scanned by the analyser 110. In an example, the analyser 110 may scan the powdered material 120 while a previous layer 118 of the powder bed 121 is fused. In another example, the analyser 110 may scan the powdered material 120 during delivery of a layer of the powdered material 120 to the powder bed 121. In some cases, the analyser 110 may be movable relative to the delivery platform 122 so that different areas of the powdered material 120 provided on the delivery platform 122 can be accurately analysed. For example, angles of inclination of the X-ray source 204 and the X-ray detector 206 relative to the delivery platform 122 can be adjusted. The X-ray source 204 and the X-ray detector 206 may be rotated about X, Y and/or Z-axes. In another example, the X-ray source 204 and the X-ray detector 206 may be movable along X, Y and/or Z-axes relative to the delivery platform 122. In some cases, the X-ray source 204 and the X-ray detector 206 may be mounted on a movable analyser platform (not shown) for movement and/or rotation of the X-ray source 204 and the X-ray detector 206. The controller 112 may actuate the analyser platform to adjust a position and/or an orientation of each of the X-ray source 204 and the X-ray detector 206.

The controller 112 is communicably coupled to the analyser 110. In some embodiments, the controller 112 regulates the X-ray source 204 to direct the X-ray beam "XB" to the powdered material 120. Further, the controller 112 may receive output signals from the X-ray detector 206. In some embodiments, the X-ray detector 206 may be connected to pulse-processing electronics (not shown) that in turn are connected to the controller 112. The controller 112 is configured to determine a contamination of the powdered material based on the detection of the X-ray fluorescence "XF". In some embodiments, the controller 112 is further configured to determine that a weight percentage of a contaminant in the powdered material is above a predetermined threshold. The X-ray detector 206 may detect the X-ray fluorescence "XF" and generate electrical signals based on the detection. In some cases, the pulse-processing electronics may convert the electrical signals received from the X-ray detector 206 to a spectrum (e.g., photons at a given energy).

The controller 112 may analyse the spectrum to assess a property of the powdered material 120 and determine the contamination of the powdered material 120. In some cases, the controller 112 may output results of the analysis to a user interface 208. The user interface 208 may include a display, an audio device, a haptic device, one or more input devices (e.g., keyboard, touchscreen, keypad etc.), or combinations thereof. In some cases, the controller 112 may generate an alert or notification upon determining the contamination of the powdered material 120. The alert or notification may be sent to the user interface 208. The alert or notification may be visual, audible, haptic, or combinations thereof. In certain cases, the controller 112 may pause or terminate an ongoing fabrication process upon determining the contamination of the powdered material 120.

The controller 112 of the system 100 may include a processor (not shown) and a memory (not shown). The memory may include computer executable instructions that are executable by the processor to perform a logic associated with the controller 112. In an example, the controller 112 may include analog-to-digital converters to process the signals from the various components of the system 100.

The processor and the memory may be in communication with each other. The processor may be in communication with additional components. The processor may be in communication with the user interface 208 that may indicate to an operator the analysis of the X-ray fluorescence "XF". In some embodiments, the processor may also receive inputs from the operator via the user interface 208. The controller 112 may control various parameters of the system 100 based on the inputs received from the operator.

The processor may be any device that performs logic operations. The processor may include a general processor, a central processing unit, an application specific integrated circuit (ASIC), a digital signal processor, a field programmable gate array (FPGA), a digital circuit, an analog circuit, a controller, a microcontroller, any other type of processor, or any combination thereof. The processor may include one or more components operable to execute computer executable instructions or computer code embodied in the memory.

The logic associated with the controller 112 may be implemented in one or more modules including hardware or a combination of hardware and software. For example, each module may include an application specific integrated circuit (ASIC), a Field Programmable Gate Array (FPGA), a circuit, a digital logic circuit, an analog circuit, a combination of discrete circuits, gates, or any other type of hardware or combination thereof. Alternatively or in addition, each module may include memory hardware, such as a portion of the memory, for example, that includes instructions executable with the processor or other processor to implement one or more of the features of the module. When any one of the modules includes the portion of the memory that includes instructions executable with the processor, the module may or may not include the processor. In some examples, each module may just be the portion of the memory or other physical memory that includes instructions executable with the processor or other processor to implement the logic of the corresponding module without the module including any other hardware.

Some of the features of the controller 112 may be stored in a computer readable storage medium (for example, as logic implemented as computer executable instructions or as data structures in memory). All or part of the controller 112 and its logic and data structures may be stored on, distributed across, or read from one or more types of computer readable storage media. Examples of the computer readable storage medium may include a hard disk, a floppy disk, a CD-ROM, a flash drive, a cache, volatile memory, non-volatile memory, RAM, flash memory, or any other type of computer readable storage medium or storage media. The computer readable storage medium may include any type of non-transitory computer readable medium, such as a CD-ROM, a volatile memory, a non-volatile memory, ROM, RAM, or any other suitable storage device.

The processing capability of the controller 112 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may be implemented with different types of data structures such as linked lists, hash tables, or implicit storage mechanisms. Logic, such as programs or circuitry, may be combined or split among multiple programs, distributed across several memories and processors, and may be implemented in a library, such as a shared library (for example, a dynamic link library (DLL)).

A network interface (not shown) may facilitate communication of the controller 112 with a packet-based network, such as a local area network. Additionally, peripheral interfaces (not shown) may be provided. For example, the peripheral interfaces may include RS232 serial interfaces to connect the controller 112 to the other parts of the system 100 to allow control thereof. The peripheral interfaces may further include Universal Serial Bus (USB) interfaces to facilitate connection of human interface devices to the controller 112, along with a Video Graphics Array (VGA) interface to allow connection of a display (e.g., the user interface 208) to the controller 112.

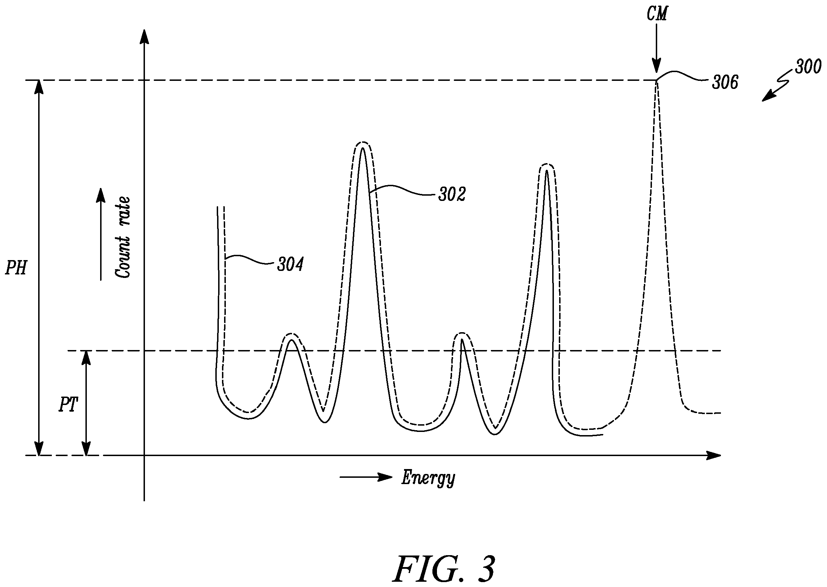

Figure 3 illustrates an exemplary plot 300 including a sample spectrum 302 and a measured spectrum 304. Referring to Figures 1, 2 and 3, the sample spectrum 302 may be stored in the memory associated with the controller 112. The measured spectrum 304 may be based on the X-ray fluorescence "XF" detected by the analyser 110. The controller 112 may compare the measured spectrum 304 with the sample spectrum 302 in order to determine if the powdered material 120 is contaminated. For example, the controller 112 may determine that a peak 306 present in the measured spectrum 304 is absent in the sample spectrum 302. The controller 112 may therefore determine that the powdered material 120 is contaminated. The peak 306 may correspond to a contaminant "CM" in the powdered material 120. The contaminant "CM" may be a foreign material (e.g., dust) and/or a feedstock powder of a different grade or composition.

A peak height and/or an intensity corresponding to the contaminant "CM" may be indicative of a concentration of the contaminant "CM" in the powdered material 120. In some cases, the controller 112 may determine a peak height "PH" of the peak 306 corresponding to the contaminant "CM". The peak height "PH" may be indicative of a weight percentage of the contaminant "CM" in the powdered material 120. Further, the controller 112 may compare the peak height "PH" of the peak 306 with a threshold height "PT". The threshold height "PT" may correspond to a predetermined threshold. The predetermined threshold may be an allowable weight percentage of a contaminant in the powdered material 120. If a contaminant is present at a weight percentage equal to or below the predetermined threshold, the powdered material 120 can be used. The controller 112 may determine that the weight percentage of the contaminant "CM" is above the predetermined threshold if the peak height "PH" of the peak 306 is greater than the threshold height "PT". Determining the weight percentage of the contaminant "CM" may provide accurate determination of contamination of the powdered material 120.

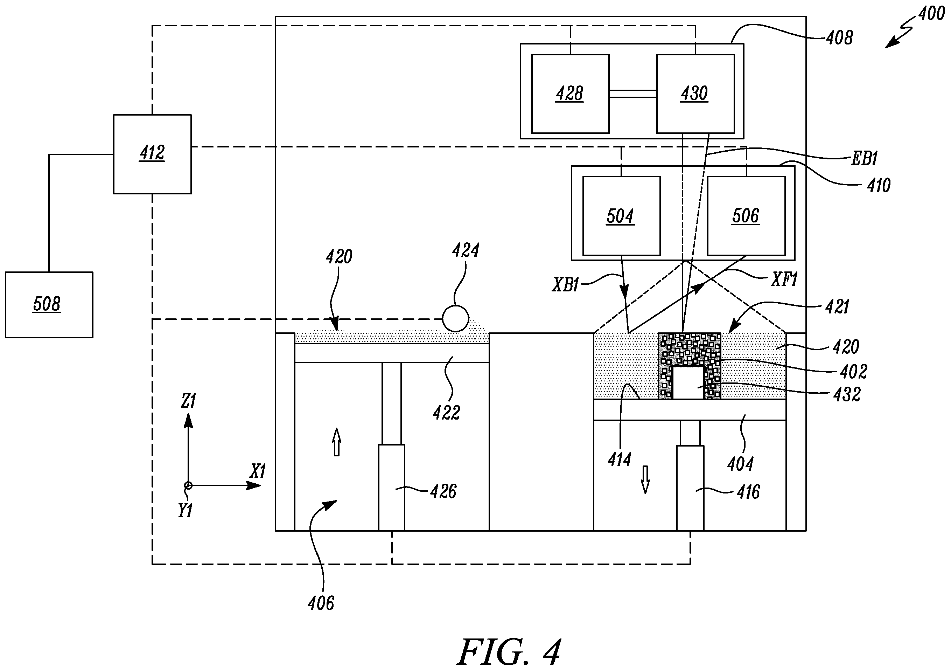

Figure 4 illustrates a system 400 for manufacturing a component 402. In some cases, the component 402 may be supported by one or more supports 432. The system 400 is substantially similar to the system 100. The system 400 includes a build platform 404, a powder delivery unit 406, an energy unit 408, an analyser 410, and a controller 412 that are substantially similar in structure and function to the build platform 104, the powder delivery unit 106, the energy unit 108, the analyser 110, and the controller 112, respectively, of the system 100. The build platform 404 includes a build surface 414. A build piston 416 is coupled to the build platform 404 and configured to selectively move the build platform 404. The powder delivery unit 406 includes a delivery platform 422, a recoating member 424 and a delivery piston 426. The energy unit 408 includes an energy source 428 and a scanning module 430. The energy unit 408 selectively directs an energy beam "EB1" to a powder bed 421. Three mutually perpendicular axis X1, Y1 and Z1 are also defined with respect to the system 400. A user interface 508 is communicably coupled to the controller 412.

However, as shown in Figure 4, the recoating member 424 of the powder delivery unit 406 is a roller. Further, the analyser 410 including an X-ray source 504 and an X-ray detector 506 is disposed above the build platform 404. The X-ray source 504 may therefore direct an X-ray beam "XB1" toward the powder bed 421 and the X-ray detector 506 may detect an X-ray fluorescence "XF1" emitted by a powdered material 420 of the powder bed 421 in response to being excited by the X-ray beam "XB1". The controller 412 may determine a concentration of the powdered material 420 based on the detection of the X-ray fluorescence "XF1". In some embodiments, the controller 412 may further determine that a weight percentage of a contaminant in the powdered material 420 of the powder bed 421 is above a predetermined threshold. In some cases, the analyser 410 may scan one or more portions of each successive layer (not shown) of the powder bed 421. In some other cases, the analyser 410 may scan a whole top area of the powder bed 421 In an example, the analyser 410 may scan the powder bed 421 during fusion of the powdered material 120. In another example, the analyser 410 may scan the powder bed 421 during recoating of the powder bed 421 by the powder delivery unit 406.

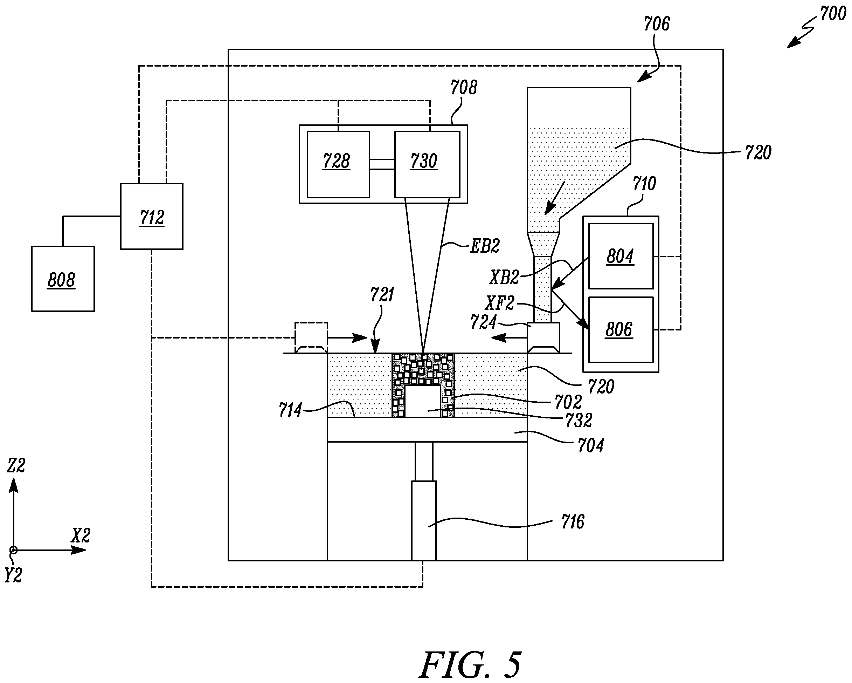

Figure 5 illustrates a system 700 for manufacturing a component 702. In some cases, the component 702 may be supported by one or more supports 732. The system 700 is substantially similar to the system 100. The system 700 includes a build platform 704, an energy unit 708, an analyser 710, and a controller 712 that are substantially similar in structure and function to the build platform 104, the energy unit 108, the analyser 110, and the controller 112, respectively, of the system 100. Three mutually perpendicular axis X2, Y2 and Z2 are also defined with respect to the system 700. However, as shown in Figure 5, the powder delivery unit 706 is a top feed unit. In other words, the powder delivery unit 706 includes a gravity feed unit configured to deposit successive layers 118 (shown in Figure 2) of a powdered material 720 on a build surface 714 of the build platform 704 to form a powder bed 721. A build piston 716 is coupled to the build platform 704 and configured to selectively move the build platform 704. The powder delivery unit 706 of Figure 5 does not include a delivery platform and a delivery piston. Instead, the powder delivery unit 706 includes a recoating member 724. The recoating member 724 is configured to selectively deposit the powdered material 720 on the build surface 714. The recoating member 724 may be movable along the X2-axis. The energy unit 708 includes an energy source 728 and a scanning module 730. The energy unit 708 selectively directs an energy beam "EB2" to the powder bed 721. A user interface 808 is communicably coupled to the controller 712.

Further, the analyser 710 including an X-ray source 804 and an X-ray detector 806 is disposed adjacent to the powder delivery unit 706. The X-ray source 804 may therefore direct an X-ray beam "XB2" toward the powdered material 720 and the X-ray detector 806 may detect an X-ray fluorescence "XF2" emitted by the powdered material 420, of the powder delivery unit 706, in response to being excited by the X-ray beam "XB2". The controller 712 may determine a concentration of the powdered material 720 based on the detection of the X-ray fluorescence "XF2". In some embodiments, the controller 712 may further determine that a weight percentage of a contaminant in the powdered material 720 of the powder delivery unit 706 is above a predetermined threshold.

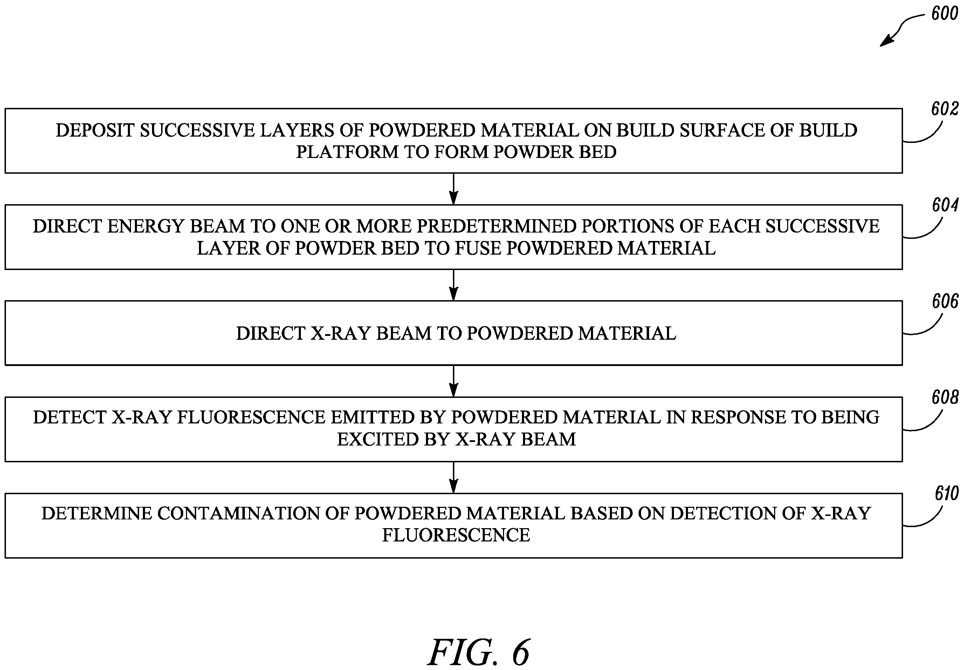

Figure 6 illustrates a method 600 for manufacturing a component. The method 600 will be described with reference to the system 100 described above with reference to Figures 1 to 2. However, the method 600 may also be implemented by the systems 400 and 700 shown in Figures 4 and 5, respectively.

At step 602, the method 600 includes depositing the successive layers 118 of the powdered material 120 on the build surface 114 to form the powder bed 121. Depositing the successive layers 118 of the powdered material 120 on the build surface 114 may further include providing the powdered material 120 on the delivery platform 122, and moving the recoating member 124 relative to the delivery platform 122 to deposit the successive layers 118 of the powdered material 120 on the build surface 114.

In some embodiments, the method 600 further includes selectively lowering the build platform 104.

At step 604, the method 600 further includes directing the energy beam "EB" to one or more predetermined portions of each successive layer 118 of the powder bed 121 to fuse the powdered material 120.

At step 606, the method 600 further includes directing the X-ray beam "XB" to the powdered material 120. In some embodiments, the X-ray beam "XB" is directed to at least one of: the powder bed 121 on the build surface 114; and the powdered material 120 provided on the build platform 104.

At step 608, the method 600 further includes detecting the X-ray fluorescence "XF" emitted by the powdered material 120 in response to being exited by the X-ray beam "XB".

At step 610, the method 600 further includes determining the contamination of the powdered material 120 based on the detection of the X-ray fluorescence "XF". In some embodiments, determining the contamination of the powdered material further includes determining that the weight percentage of the contaminant in the powdered material 120 is above the predetermined threshold.

The systems 100, 400 and the method 600 of the present disclosure integrate X-ray fluorescence (XRF) analysis with powder bed fusion. XRF analysis may provide real-time monitoring during production of a component. XRF analysis can occur in real-time while an energy beam is fusing a previous layer of a powder bed. As a result, XRF analysis may not increase a build time of a fabrication process. Further, XRF analysis may provide material monitoring of all the parts that are produced. Therefore, XRF analysis can provide real-time 100% monitoring or coverage of the powder bed or the powdered material unlike conventional methods like powder sampling or specimen measurement. Consequently, any contamination may not propagate through multiple production cycles and builds. Additionally, production cycles may not be slowed down. XRF analysis can also avoid per-part cost of conventional quality assurance (QA) methods. Integration of XRF analysis with the systems 100, 400 and the method 600 may also be cost effective and convenient.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A system (100) for manufacturing a component (102), comprising:
a build platform (104) having a build surface (114);
a powder delivery unit (106) configured to deposit successive layers (118) of a powdered material (120) on the build surface (114) of the build platform (104) to form a powder bed (121);
an energy unit (108) configured to selectively direct an energy beam (EB) to one or more predetermined portions of each successive layer (118) of the powder bed (121) to fuse the powdered material (120);
at least one analyser (110) configured to direct an X-ray beam (XB) to the powdered material (120) and detect an X-ray fluorescence (XF) emitted by the powdered material (120) in response to being excited by the X-ray beam (XB); and
a controller (112) configured to determine a contamination of the powdered material (120) based on the detection of the X-ray fluorescence (XF).

2. The system (100) of claim 1, further comprising a build piston (116) coupled to the build platform (104) and configured to selectively move the build platform (104).

3. The system (100) of claim 1 or 2, wherein the powder delivery unit (106) further comprises:
a delivery platform (122) receiving the powdered material (120) thereon;
a recoating member (124) movable relative to the delivery platform (122) and configured to selectively deposit the successive layers (118) of the powdered material (120) on the build surface (114); and
a delivery piston (126) coupled to the delivery platform (122) and configured to selectively move the delivery platform (122).

4. The system (100, 400) of claim 3, wherein the recoating member is one of a blade (124) and a roller (424).

5. The system (100) of any one of claims 1 to 4, wherein the at least one analyser (110) further comprises:
an X-ray source (204) configured to generate and direct the X-ray beam (XB); and
an X-ray detector (206) configured to detect the X-ray fluorescence (XF) emitted by the powdered material (120) in response to being excited by the X-ray beam (XB).

6. The system (100) of any one of claims 1 to 5, wherein the energy unit (108) further comprises:
an energy source (128) configured to selectively generate the energy beam (EB); and
a scanning module (130) configured to direct the energy beam (EB) generated by the energy source (128).

7. The system (100) of claim 6, wherein the energy source (128) is one of a laser source and an electron beam source.

8. The system (400) of any one of claims 1 to 7, wherein the at least one analyser (410) is disposed above the build platform (404).

9. The system (100) of any one of claims 1 to 7, wherein the at least one analyser (110) is disposed above the powder delivery unit (106).

10. The system (100) of any one of claims 1 to 9, wherein the controller (112) is further configured to determine that a weight percentage of a contaminant (CM) in the powdered material (120) is above a predetermined threshold.

11. A method (600) for manufacturing a component (102), comprising:
depositing (602) successive layers (118) of a powdered material (120) on a build surface (114) of a build platform (104) to form a powder bed (121);
directing (604) an energy beam (EB) to one or more predetermined portions of each successive layer (118) of the powder bed (121) to fuse the powdered material (120);
directing (606) an X-ray beam (XB) to the powdered material (120);
detecting (608) an X-ray fluorescence (XF) emitted by the powdered material (120) in response to being excited by the X-ray beam (XB); and
determining (610) a contamination of the powdered material (120) based on the detection of the X-ray fluorescence (XF).

12. The method (600) of claim 11, further comprising selectively lowering the build platform (104).

13. The method (600) of claims 11 or 12, wherein depositing the successive layers (118) of the powdered material (120) on the build surface (114) further comprises:
providing the powdered material (120) on a delivery platform (122);
moving a recoating member (124) relative to the delivery platform (122) to deposit the successive layers (118) of the powdered material (120) on the build surface (114).

14. The method (600) of any one of claims 11 to 13, wherein the X-ray beam (XB) is directed to at least one of:
the powder bed (121) on the build surface (114); and
the powdered material (120) provided on the delivery platform (122).

15. The method (600) of any one of claims 11 to 14, wherein determining the contamination of the powdered material (120) further comprises determining that a weight percentage of a contaminant (CM) in the powdered material (120) is above a predetermined threshold.
